# EUROPEAN PATENT SPECIFICATION

(11) **EP 2 856 833 B1**
(45) Date of publication and mention of the grant of the patent: **07.08.2019**
(21) Application number: 12878532.6
(22) Date of filing: 05.06.2012
(51) Int. Cl.: H04B 7/08, H04W 24/02

(54) **METHOD FOR SELECTING ANTENNAS TO BE INCLUDED IN A SET OF RECEIVING ANTENNAS**
VERFAHREN ZUR AUSWAHL VON ANTENNEN ZUM EINBAU IN EINEN SATZ VON EMPFANGSANTENNEN
PROCÉDÉ POUR SÉLECTIONNER DES ANTENNES DEVANT ÊTRE INCLUSES DANS UN ENSEMBLE D'ANTENNES DE RÉCEPTION

(43) Date of publication of application: 08.04.2015
(73) Proprietor: Telefonaktiebolaget LM Ericsson (publ), 164 83 Stockholm (SE)
(72) Inventor: BENTLAND, Benny, S-437 93 Lindome (SE); BLOM, Nina, S-416 74 Göteborg (SE); SJÖSTRÖM, Gunilla, S-417 29 Göteborg (SE); KRONQUIST, Göran, S-443 70 Gråbo (SE)
(74) Representative: Brann AB
(86) International application number: PCT/SE2012/050603
(87) International publication number: WO 2013/184051

(56) References cited:
- EP-A1- 2 264 960
- US-A1- 2010 323 611
- US-A1- 2011 080 879
- US-A1- 2011 261 711
- 'Opportunistic coordinated multi-point reception for multi- codeword uplink transmission' 3GPP DRAFT R1-112455 16 August 2011, XP050537548

## Description

### TECHNICAL FIELD

Embodiments herein relate to a radio network node, a method therein, and to a radio communications system comprising the radio network node. In particular, embodiments herein relate to the reception of data comprised in an uplink transmission on a common channel.

### BACKGROUND

Communication devices such as User Equipments (UE) are enabled to communicate wirelessly in a radio communications system, sometimes also referred to as a radio communications network, a mobile communication system, a wireless communications network, a wireless communication system, a cellular radio system or a cellular system. The communication may be performed e.g. between two user equipments, between a user equipment and a regular telephone and/or between a user equipment and a server via a Radio Access Network (RAN) and possibly one or more core networks, comprised within the wireless communications network.

User equipments are also known as e.g. mobile terminals, wireless terminals and/or mobile stations, mobile telephones, cellular telephones, or laptops with wireless capability, just to mention some examples. The user equipments in the present context may be, for example, portable, pocket-storable, hand-held, computer-comprised, or vehicle-mounted mobile devices, enabled to communicate voice and/or data, via the RAN, with another entity.

The wireless communications network covers a geographical area which is divided into cell areas, wherein each cell area being served by a network node such as a Base Station (BS), e.g. a Radio Base Station (RBS), which sometimes may be referred to as e.g. eNB, eNodeB, NodeB, B node, or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several radio access and communication technologies. The base stations communicate over the radio interface operating on radio frequencies with the user equipments within range of the base stations.

In some RANs, several base stations may be connected, e.g. by landlines or microwave, to a radio network controller, e.g. a Radio Network Controller (RNC) in Universal Mobile Telecommunications System (UMTS), and/or to each other. The radio network controller, also sometimes termed a Base Station Controller (BSC) e.g. in GSM, may supervise and coordinate various activities of the plural base stations connected thereto. GSM is an abbreviation for Global System for Mobile Communications (originally: Groupe Special Mobile).

In the context of this disclosure, the expression Downlink (DL) is used for the transmission from the base station to the UE. The expression Uplink (UL) is used for the transmission in the opposite direction i.e. from the UE to the base station.

In 3rd Generation Partnership Project (3GPP) Long Term Evolution (LTE), base stations, which may be referred to as eNodeBs or even eNBs, may be directly connected to one or more core networks.

UMTS is a third generation mobile communication system, which evolved from the GSM, and is intended to provide improved mobile communication services based on Wideband Code Division Multiple Access (WCDMA) access technology. UMTS Terrestrial Radio Access Network (UTRAN) is essentially a radio access network using wideband code division multiple access for user equipments. The 3GPP has undertaken to evolve further the UTRAN and GSM based radio access network technologies.

According to 3GPP/GERAN, a user equipment has a multi-slot class, which determines the maximum transfer rate in the uplink and downlink direction. GERAN is an abbreviation for GSM EDGE Radio Access Network. EDGE is further an abbreviation for Enhanced Data rates for GSM Evolution.

As previously mentioned, a telecommunication radio access network covers large areas that are built up of smaller cells. The cell comprises common channels and user dedicated channels in both downlink and uplink. Within an area covered by several cells the common channels are unique for the cell and the radio network node serving the cell while dedicated channels are unique to the user equipment. The radio network node serving the cell broadcasts cell information to the user equipment, which cell information defines the cell. The coverage of the cell is given by the transmitted power and the design of the antennas.

In a WCDMA telecommunication system the radio network node serving the cell provides an uplink Random Access procedure. When a user equipment needs to setup a connection or transmit data to the network it makes use of the random access procedure to request access to a Physical Random Access CHannel (PRACH), or to request access to an Enhanced Dedicated CHannel (E-DCH) in IDLE mode or in CELL_FACH mode (common E-DCH). The user equipment selects the best cell among the cells detected and uses the random access procedure as defined by the broadcast information received from the best cell. The best cell may be selected based on signal conditions on downlink. Based on the random access procedure parameters the user equipment randomly selects an access slot from the set of available access slots. Then, the user equipment randomly selects a signature from a set of available signatures. The signature is then transmitted, in the access slot selected, on a scrambling code reserved for the random access procedure for the selected cell. The signal that is transmitted is called a random access preamble and when a user equipment sends the random access preamble it makes a request to send data to the network via the selected cell. The radio network node serving the cell has the possibility to acknowledge (ACK) or not acknowledge (NACK) the data transmission request.

If the random access is acknowledged by the radio network node serving the cell, the user equipment transmits its data at a predefined time instant relative to the previous sent random access preamble. The ACK is by the signature selected in the preamble associated with a transmission resource, e.g. a PRACH channel code, and in case of a common Enhanced Dedicated CHannel (E-DCH) transmission required E-DCH configuration parameters such as scrambling code, Fractional Dedicated Physical CHannel (F-DPCH), and E-DCH Hybrid Automatic Repeat Query (ARQ) Indicator Channel (E-HICH).

The set of available signatures are divided into two sets. One set is to be used by user equipments for E-DCH transmission in IDLE mode or CELL_FACH mode (common E-DCH) and the other set is to be used for PRACH data burst in case of a received ACK on the AICH channel.

The user data transmitted by the user equipment is received by the network in the selected cell.

At cell borders coverage from adjacent cells within the same carrier are overlapping. The reason is to get a smooth handover between cells for connected user equipments in CELL_DCH state by establishing and deleting radio links to adjacent cells.

A user equipment in CELL_DCH state can have active radio links in several cells at the same time. The handover is triggered by cell measurements performed by the user equipment.

However, if the user equipment is in IDLE mode or CELL_FACH mode it accesses the network by using a common resource offered by the cell. The user equipment selects the best cell based on received power on the downlink common pilot channel and initiates the random access procedure by selecting and sending a preamble to the selected cell. Due to unbalanced DL/UL cell coverage, high UL interference local in cell, a poor measurement method implemented by the user equipment or due to the use of different frequencies in the downlink and uplink, it may be the case that the cell selected for transmission by the user equipment is not the best cell in an uplink reception perspective.

US Publication No. 2010/0323611 A1 relates to coordinated multipoint transmission and reception in a cellular network.

US Publication No. 2011/0261711 A1 relates to assignment of a channel to user equipment in a wireless indoor communication system.

### SUMMARY

An object of embodiments herein is to provide a way of improving the performance in a communications network.

According to a first aspect of embodiments herein, the object is achieved by a method in a first radio network node for reception of data comprised in an UL transmission on a common channel. The first radio network node serves a primary cell comprising a primary antenna. Further, the first radio network node, the primary cell, a second radio network node, at least one second secondary cell served by the second radio network node, at least one secondary antenna, and at least one first secondary antenna are comprised in a communications system. A user equipment is located in the primary cell.

The first radio network node adds the primary antenna and the at least one secondary antenna to a set of receiving antennas. The first radio network node adds the information about the at least one second secondary antenna to the set of receiving antennas when a signal strength of the received user equipment transmission is above a threshold value.

When the primary antenna receives a user equipment transmission, the first network node requests the second radio network node to search for the user equipment transmission being received in the at least one second secondary antenna of the at least one second secondary cell, where the at least one second secondary cell is a neighbour cell to the primary cell. When the at least one second secondary antenna receives the user equipment transmission, the first radio network node receives information about the at least one second secondary antenna from the second radio network node. Further, the at least one second secondary antenna is comprised in the at least one second secondary cell.

Further, the first radio network receives the data comprised in the UL transmission from all antennas comprised in the set of receiving antennas.

According to a second aspect of embodiments herein, the object is achieved by a first radio network node for reception of data comprised in an UL transmission on a common channel. The first radio network node serves a primary cell comprising a primary antenna. Further, the first radio network node, the primary cell, a second radio network node, at least one second secondary cell served by the second radio network node, at least one second secondary antenna, and at least one first secondary antenna are comprised in a communications system. A user equipment is located in the primary cell.

The first radio network node comprises an adding circuit configured to add the primary antenna and the at least one secondary antenna to a set of receiving antennas. The adding of the at least one second secondary antenna comprises adding the information about the at least one second secondary antenna to the set of receiving antennas when a signal strength of the received user equipment transmission is above a threshold value.

The first radio network node further comprises a requesting circuit configured to request the second radio network node to search for a user equipment transmission being received in the at least one second secondary antenna of the at least one second secondary cell being neighbour cell to the primary cell, when the user equipment transmission is received in the primary antenna. The first radio network node further comprises a receiving circuit configured to receive information about the at least one second secondary antenna from the second radio network node when the user equipment transmission is received in the at least one second secondary antenna. Further, the at least one second secondary antenna is comprised in the at least one second secondary cell.

The first radio network node comprises further a receiving circuit configured to receive the data comprised in the UL transmission from all antennas comprised in the set of receiving antennas.

According to a third aspect of embodiments herein, the object is achieved by a radio communications system comprising the first radio network node.

Since the user equipment transmission is received in all antennas comprised in the set of receiving antennas, the reception of user data is improved. This results in an improved performance in the communications network.

An advantage of embodiments herein is the possibility, due to increased diversity gain, to improve the detection performance of the data sent by the user equipment on the common channel.

A further advantage of embodiments herein is that in case of for example a common E-DCH transmission the user equipment is power controlled. Due to increased diversity gain the cell can order the user equipment to reduce its UL transmission power and the communications system will benefit from a decreased interference caused by the user equipment.

### BRIEF DESCRIPTION OF THE DRAWINGS

Examples of embodiments herein are described in more detail with reference to attached drawings in which:
Figure 1 is a schematic block diagram illustrating embodiments of a communications system;
Figure 2 is a flow chart depicting embodiments of a method in a radio network node; and
Figure 3 is a schematic block diagram illustrating embodiments of a radio network node.

### DETAILED DESCRIPTION

Embodiments herein will be exemplified in the following non-limiting description.

Embodiments described herein provide for the use of several antennas to improve reception of data in an uplink transmission on a common channel. An uplink user equipment transmission, such as a random access, is performed to a specific cell. Dependent on possible overlap from adjacent cells, the user equipment transmission is received also in one or more antennas of the adjacent cells. Embodiments herein relate to the use of the antenna diversity obtained from several adjacent cells in order to improve the received user equipment transmission in a cell specific common uplink channel.

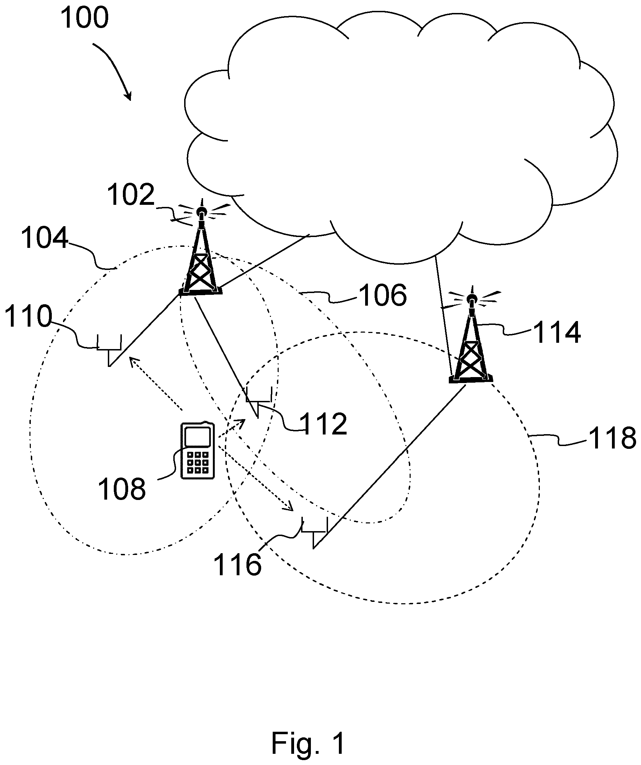

**Figure 1** schematically illustrates embodiments of **a radio communications system 100.** The radio communication system 100 may be a 3GPP communications system or a non-3GPP communications system. The radio communications system 100 may comprises one or more of radio communications networks (not shown). Each radio communications network may be configured to support one or more Radio Access Technologies (RATs). Further, the one or more radio communications networks may be configured to support different RATs. Some examples of RATs are GSM, WCDMA, and LTE.

The radio communications system 100 comprises a **radio network node 102**, herein sometimes also referred to as a **first radio network node 102**. The radio network node 102 may be a base station such as an eNB, an eNodeB, Node B or a Home Node B, a Home eNode B, a radio network controller, a base station controller, an access point, a relay node (which may be fixed or movable), a donor node serving a relay, a GSM/EDGE radio base station, a Multi-Standard Radio (MSR) base station or any other network unit capable to serve a user equipment in the cellular communications system 100.

Further, the radio network node 102 provides radio coverage over **at least one cell 104, 106**. In Figure 1, the radio network node 102 is illustrated to provide radio coverage over a **primary cell 104**, and over **at least one first secondary cell 106**. In some embodiments, a user equipment may select the cell with best received downlink signal power for random access in uplink. In this description, the primary cell 104 of the radio network node 102 is considered to be the cell selected by the user equipment. Consequently, the at least one first secondary cell 106 is at least one cell in which the user equipment transmission may be received but it is not selected by the user equipment for transmission.

The radio communications system 100 comprises further **a user equipment 108**. The user equipment 108 transmits data over a radio interface to the radio network node 102 in an uplink (UL) transmission and the radio network node 102 transmits data to the user equipment 108 in a downlink (DL) transmission. A number of other user equipments, not shown, may also be located within the geographic area 104.

The first user equipment 108 may be e.g. a mobile terminal or a wireless terminal, a mobile phone, a computer such as e.g. a laptop, a tablet pc such as e.g. an iPad™, a Personal Digital Assistant (PDA), or any other radio network unit capable to communicate over a radio link in a cellular communications network. The first user equipment 108 may further be configured for use in both a 3GPP network and in a non-3GPP network.

Further, the communications system comprises **a primary antenna 110**. The primary antenna 110 is comprised in the primary cell 104 and arranged in communication with the radio network node 102. The primary antenna 110 is configured to receive a transmission from the user equipment 108.

The user equipment 108 transmission may be or comprise an access request and/or a signal transmitted on an Enhanced Dedicated Physical Data Channel (E-DPDCH) and/or an Enhanced Dedicated Physical Control Channel (E-DPCCH), or the user equipment 108 transmission may be or comprise an access request and/or a signal transmitted on a Physical Random Access Channel (PRACH).

**At least one secondary antenna 112, 116** is comprised in the communications system 100.

At least one first secondary antenna 112 is comprised in the primary cell 104 or in the at least one first secondary cell 106. The at least one first secondary antenna 112 is arranged in communication with the first radio network node 104.

Further, at least one second secondary antenna 116 is comprised in **at least one second secondary cell 118**. The at least one second secondary antenna 112 is arranged in communication with **a second radio network node 114**. The second radio network node 114 and the at least one second secondary cell 118 are comprised in the communications system 100. Further, the at least one second secondary cell 118 is served by the second radio network node 114. Furthermore, the at least one second secondary cell 118 is at least one cell in which the user equipment transmission may be received but it is not selected by the user equipment for transmission.

The second radio network node 114 may be a base station such as an eNB, an eNodeB, Node B or a Home Node B, a Home eNode B, a radio network controller, a base station controller, an access point, a relay node (which may be fixed or movable), a donor node serving a relay, a GSM/EDGE radio base station, a Multi-Standard Radio (MSR) base station or any other network unit capable to serve a user equipment in the cellular communications system 100. Further, the second radio network node 114 provides radio coverage over the at least one second secondary cell 118.

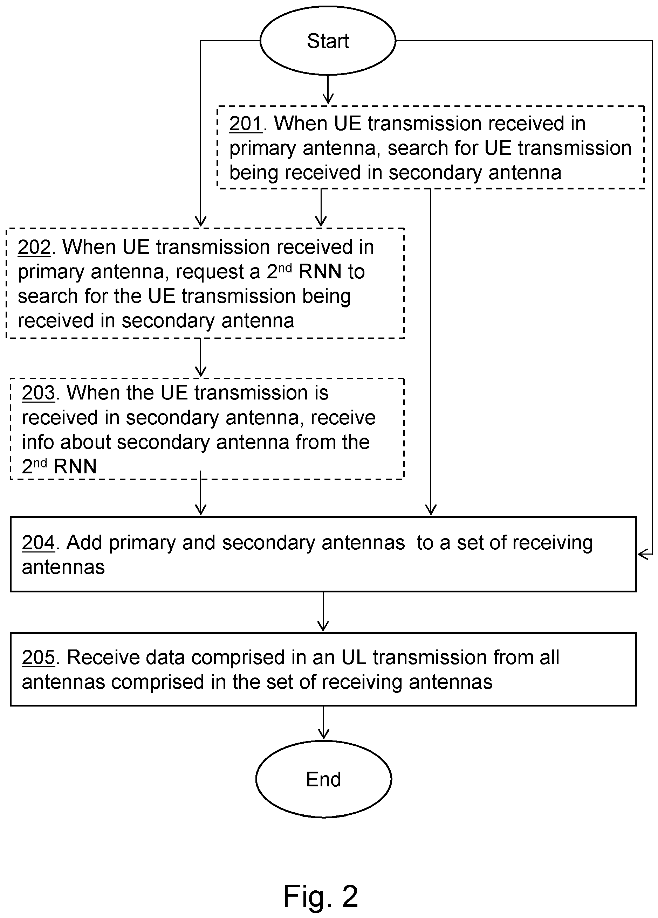

**A method in a radio network node 102** for reception of data comprised in an UL transmission on a common channel will now be described with reference to **Figure 2**. As previously mentioned, the radio network node 102 serves a primary cell 104, which primary cell 104 comprises a primary antenna 110.The radio network node 102, the primary cell 104 and at least one secondary antenna 112,116 are comprised in the communications system 100. Further, a user equipment 108 is located in the primary cell 104. Further, as previously mentioned, the at least one first secondary antenna 112 is comprised in the primary cell 104 or in the at least one first secondary cell 106. Furthermore, the at least one first secondary cell 106 is served by the radio network node 102 and is a neighbour cell to the primary cell 104.

By the term "neighbour cell" when used herein is meant a cell wherein the transmission from the user equipment 108 is possible to be received.

The actions do not have to be performed in the order stated below, but may be taken in any suitable order. Further, actions may be combined. Optional actions are indicated by dashed boxes.

### Action 201

When a transmission from the user equipment 108 is received in the primary antenna 110 and in order to find at least one more antenna that may be used for reception of user data, the radio network node 102 may search for the user equipment 108 transmission being received in the at least one first secondary antenna 112. In other words, when a transmission from the user equipment 108 is received in the primary antenna 110, the radio network node 102 may search for the user equipment 108 transmission being received in at least one more antenna which is located within a cell that is served by the radio network node 102.

### Action 202

When the user equipment 108 transmission is received in the primary antenna 110 and in order to find at least one more antenna that may be used for reception of user data, the first radio network node 102 may request the second radio network node 114 to search for the user equipment 108 transmission being received in the at least one second secondary antenna 116 of the at least one secondary cell 118. The at least one secondary cell 118 is served by a second radio network node 114 and is a neighbour cell to the primary cell 104. In other words, when a transmission from the user equipment 108 is received in the primary antenna 110, the first radio network node 102 may request the second radio network node 114 to search for the user equipment 108 transmission being received in at least one antenna which is located within a cell that is served by the second radio network node 108.

### Action 203

When then the user equipment 108 transmission is received in the second secondary antenna 116 comprised in the at least one second secondary cell 118 served by the second radio network node 114, the first radio network node 102 may receive information about the at least one second secondary antenna 116 from the second radio network node 114. Thus, the second radio network node 108 will provide the first radio network node 102 with information about the at least one second secondary antenna 116 that may be used for reception of user data in order to improve the user data reception.

### Action 204

In order to know which antennas to use for user data reception, the radio network node 102 adds the primary antenna 110 and the at least one secondary antenna 112,116 to a set of receiving antennas. This may also be expressed as the radio network node 102 expands the set of receiving antennas. Information relating to the identity of the primary and secondary antennas 110,112,116, signal strength, and/or signal quality may be added to the set of receiving antennas. The signal strength and the signal quality may be estimated signal strength and estimated signal quality, respectively.

The primary antenna 110 and the at least one secondary antenna 112,116 have received a transmission from the user equipment 108. As previously mentioned, the primary antenna 110 is comprised in the primary cell 104, and the at least one secondary antenna 112,116 is comprised in the primary cell 104 or in the at least one secondary cell 106,118.

In some embodiments, the common channel is a common Enhanced Dedicated Channel (E-DCH). In such embodiments, the radio network node 102 adds the information about the secondary antenna 112,116 to the set of receiving antennas when a signal strength of the received user equipment 108 transmission is above a threshold value. The signal strength may be based on the received user equipment 108 transmission, such as a received access request and/or a received signal transmitted on,a Dedicated Physical Control Channel (DPCCH), and/or Enhanced Dedicated Physical Control Channel (E-DPCCH) and/or on an Enhanced Dedicated Physical Data Channel (E-DPDCH).

In some embodiments, the common channel is a Random Access Channel (RACH). In such embodiments, the radio network node 102 adds the information about the secondary antenna 112,116 to the set of receiving antennas when a signal strength of the received user equipment 108 transmission is above a threshold value. The signal strength may be based on the received user equipment 108 transmission, such as a received access request and/or a received signal transmitted on a Physical Random Access Channel (PRACH).

### Action 205

The radio network node 102 receives the data comprised in the UL transmission from all antennas 110,112,116 comprised in the set of receiving antennas. Thereby, the user data reception is improved.

The UL transmission received on each antenna 110,112,116 in the set of receiving antennas may be channel compensated combined and decoded before the data comprised in the UL transmission is received in the radio network node 102.

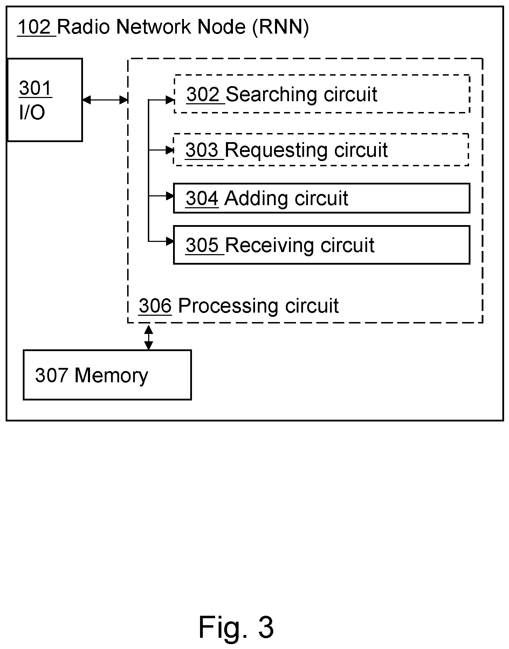

To perform the method actions in radio network node 102 described above in relation to Figure 2 for reception of data comprised in an UL transmission on a common channel, the radio network node 102 comprises the following arrangement depicted in **Figure 3****.**

As previously mentioned, the radio network node 102 serves a primary cell 104 which comprises a primary antenna 110. The radio network node 102, the primary cell 104 and at least one secondary antenna 110,112 are comprised in the communications system 100. Further, a user equipment 108 is located in the primary cell 104.

The radio network node 102 comprises **an input and output port 301** configured to function as an interface for communication in the communication system 100. The communication may for example be communication with the first and/or second radio network node 102,114 and/or communication with one or more second user equipments (not shown).

The radio network node 102 may further comprise **a searching circuit 302**. The searching circuit 302 is configured to search for the user equipment 108 transmission being received in the at least one first secondary antenna 112. The at least one first secondary antenna 112 is comprised in the primary cell 104 or in the at least one first secondary cell 106, which at least one first secondary cell 106 is a neighbour cell the primary cell 104.

In some embodiments, when the at least one first secondary cell 106 is served by the radio network node 102, and when the user equipment 108 transmission is received in the primary antenna 110, the searching circuit 302 is configured to search for the user equipment 108 transmission being received in the at least one first secondary antenna 112.

The radio network node 102 may further comprise **a requesting circuit 303**. The requesting circuit 303 may be configured to request the second radio network node 114 to search for the user equipment 108 transmission being received in at least one second secondary antenna 116 of the at least one second secondary cell 118. The at least one second secondary cell 118 is a neighbour cell to the primary cell 104.

In some embodiments, when the at least one second secondary cell 118 is served by a second radio network node 114, and when the user equipment 108 transmission is received in the primary antenna 110, the radio network node 102 is configured to request the second radio network node 114 to search for the user equipment 108 transmission being received in the at least one second secondary antenna 116.

Further, the radio network node 102 comprises **an adding circuit 304**. The adding circuit 304 is configured to add information about the primary antenna 110 and information about the at least one secondary antenna 112,116 to a set of receiving antennas. This may also be expressed as the adding circuit 304 is configured to expand the set of receiving antennas.

The primary antenna 110 and the at least one secondary antenna 112,116 are antennas that received a transmission from the user equipment 108. Further, the primary antenna 110 is comprised in the primary cell 104 and the at least one secondary antenna 112,116 is comprised in the primary cell 104 or in the at least one secondary cell 106,118.

In some embodiments, the common channel is a common Enhanced Dedicated Channel (E-DCH). In such embodiments, the adding circuit 304 may further be configured to add the information about the at least one secondary antenna 112,116 to the set of receiving antennas when a signal strength of the received user equipment 108 transmission is above a threshold value. The signal strength may be based on the received user equipment 108 transmission, such as a received access request and/or a received signal transmitted on a Dedicated Physical Control Channel (DPCCH),and/or Enhanced Dedicated Physical Control Channel (E-DPCCH) and/or on an Enhanced Dedicated Physical Data Channel (E-DPDCH).

In some embodiments, the common channel is a Random Access Channel (RACH). In such embodiments, the adding circuit 304 may further be configured to add the information about the at least one secondary antenna 112,116 to the set of receiving antennas when a signal strength of the received user equipment 108 transmission is above a threshold value. The signal strength may be based on the received user equipment 108 transmission, such as a received access request and/or a received signal transmitted on a Physical Random Access Channel (PRACH).

The radio network node 102 comprises further a **receiving circuit 305** configured to receive the data comprised in the UL transmission from all antennas 110,112,116 comprised in the set of receiving antennas.

In some embodiments, when the user equipment 108 transmission is received in the at least one secondary antenna 112,116, the receiving circuit 305 is further configured to receive information about the at least one secondary antenna 112,116 from the second radio network node 114.

Embodiments herein for reception of data comprised in an UL transmission on a common channel may be implemented through one or more processors, such as a **processing circuit 306** depicted in Fig. 3, together with computer program code for performing the functions and/or method actions of embodiments herein.

It should be understood that one or more of the circuits comprised in the radio network node 102 described above may be integrated with each other to form an integrated circuit.

The radio network node 102 may further comprise **a memory 307**. The memory may comprise one or more memory units and may be used to store for example data such as thresholds, predefined or pre-set information, etc.

Embodiments herein do also relate to a radio communications system 100 comprising the radio network node 102.

### Example

In some embodiments, the user equipment 108 may select the cell with best received downlink signal power for random access in uplink. In this description, the primary cell 104 of the radio network node 102 is considered to be the cell with the best received downlink signal power. To request a random access resource, the user equipment 108 may transmit an access request in uplink to the first radio network node 102. The access request may be transmitted as a preamble in uplink. Further, the access request may be for user data transmission on either a RACH or a common E-DCH channel. The preamble may be detected by an antenna, i.e. the primary antenna 110, in the selected cell, i.e. the primary cell 104, by for example UL Preamble Detection. If the access is granted an ACK is sent to the user equipment 108 from the radio network node 102. The UE 108 then transmits the user data in the selected cell. To improve the reception of user data embodiments herein provides for searching for and including signals received in adjacent antennas, i.e. in secondary antennas 112,116.

For detected preambles and ACKed preambles, the radio network node 102 searches for the access request being received in one or more secondary antennas 112,116 being comprised in the primary cell 104 or in secondary cells 106,118. The secondary cells 106,118 are neighbour cells to the primary cell 104. The first radio node 102 may also request a second radio network node 114 to search for the preamble being received in one or more secondary antennas 116 comprised in one or more secondary cells 118 served by the second radio network node 114. If the preamble is detected in one or more of the secondary antennas 112,116, the first radio network node 102 adds the one or more secondary antenna 112,116, as possible receiving antennas. Thereby, the receiving antenna area is increased.

Then the radio network node 102 uses all added antennas for uplink reception of user data in the subsequent RACH message or common E-DCH channel. Thereby, the reception of the subsequent user data transmission is improved.

It should be understood that the detection criterion for adding the antennas of a cell for possible reception does not necessarily have to be the same as the preamble detection criterion. In addition to using the RACH preamble other measurement methods may be used, e.g. received PRACH, DPCCH and/or E-DPCCH and/or E-DPDCH signal strength, in order to finally decide if a neighbour cell shall be added for uplink reception or not.

Although the description above contains many specifics, they should not be construed as limiting but as merely providing illustrations of some presently preferred embodiments. The technology fully encompasses other embodiments which may become apparent to those skilled in the art. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for a device or method to address each and every problem sought to be solved by the described technology for it to be encompassed hereby.

When using the word "comprise" or "comprising" it shall be interpreted as non-limiting, in the meaning of consist at least of.

When using the word action/actions it shall be interpreted broadly and not to imply that the actions have to be carried out in the order mentioned. Instead, the actions may be carried out in any suitable order other than the order mentioned. Further, some action/actions may be optional.

Further, the dotted boxes and dotted arrows in the drawings schematically illustrate optional features and actions of embodiments herein.

The embodiments herein are not limited to the above described examples. Various alternatives, modifications and equivalents may be used. Therefore, the above examples should not be taken as limiting the scope of the invention, which is defined by the appended claims.

## Claims

1. A method in a first radio network node (102) for reception of data comprised in an uplink, UL, transmission on a common channel, which first radio network node (102) serves a primary cell (104) comprising a primary antenna (110), wherein the first radio network node (102), the primary cell (104), a second radio network node (114), at least one second secondary cell (118) served by the second radio network node (114), at least one second secondary antenna (116), and at least one first secondary antenna (112) are comprised in a communications system (100), and wherein a user equipment (108) is located in the primary cell (104), the method comprises:
- when a user equipment (108) transmission is received in the primary antenna (110), requesting (202) the second radio network node (114) to search for the user equipment (108) transmission being received in the at least one second secondary antenna (116) of the at least one second secondary cell (118), which at least one second secondary cell (118) is a neighbour cell to the primary cell (104);
- when the user equipment (108) transmission is received in the at least one second secondary antenna (116), receiving (203) information about the at least one second secondary antenna (116) from the second radio network node (114);
- adding (204) the primary antenna (110) and at least one secondary antenna (112, 116) to a set of receiving antennas when a signal strength of the received user equipment (108) transmission is above a threshold value, wherein the at least one second secondary antenna (116) is comprised in the at least one second secondary cell (118) of the communications system (100), and wherein the adding of the at least one second secondary antenna (116) to the set of receiving antennas further comprises adding the information about the at least one second secondary antenna (116) to the set of receiving antennas; and
- receiving (205) the data comprised in the UL transmission from all antennas (110, 112, 116) comprised in the set of receiving antennas.

2. The method of claim 1, wherein the method further comprises:
- when the user equipment (108) transmission is received in the primary antenna (110), searching (201) for the user equipment (108) transmission being received in the at least one first secondary antenna (112), wherein the at least one first secondary antenna (112) is comprised in at least one first secondary cell (106), which at least one first secondary cell (106) is served by the first radio network node (102) and is a neighbour cell to the primary cell (104), and wherein the adding (204) of the at least one first secondary antenna (112) to the set of receiving antennas further comprises adding the information about the at least one first secondary antenna (112) when a signal strength of the received user equipment (108) transmission is above the threshold value.

3. The method of any one of claim 1 or 2, wherein the common channel is a common Enhanced Dedicated Channel, E-DCH.

4. The method of claim 3, wherein the signal strength is based on the received user equipment (108) transmission, such as a received access request and/or a received signal transmitted on a Dedicated Physical Control Channel, DPCCH, an Enhanced Dedicated Physical Control Channel, E-DPCCH, and/or on an Enhanced Dedicated Physical Data Channel, E-DPDCH.

5. The method of any one of claim 1 or 2, wherein the common channel is a Random Access Channel, RACH.

6. The method of claim 5, wherein the signal strength is based on the received user equipment (108) transmission, such as a received access request and/or a received signal transmitted on a Physical Random Access Channel, PRACH.

7. A first radio network node (102) for reception of data comprised in an uplink, UL, transmission on a common channel, which first radio network node (102) serves a primary cell (104) comprising a primary antenna (110), wherein the first radio network node (102), the primary cell (104), a second radio network node(114), at least one second secondary cell (118) served by the second radio network node (114), at least one second secondary antenna (116), and at least one first secondary antenna (112) are comprised in a communications system (100), and wherein a user equipment (108) is located in the primary cell (104), the first radio network node (102) comprises:
- a requesting circuit (303) configured to, when a user equipment (108) transmission is received in the primary antenna (110), request the second radio network node (114) to search for the user equipment (108) transmission being received in the at least one second secondary antenna (116) of the at least one second secondary cell (118) being neighbour cell to the primary cell (104);
- a receiving circuit (305) configured to receive information about the at least one second secondary antenna (116) from the second radio network node (114) when the user equipment (108) transmission is received in the at least one second secondary antenna (116);
- an adding circuit (304) configured to add the primary antenna (110) and at least one secondary antenna (112, 116) to a set of receiving antennas when a signal strength of the received user equipment (108) transmission is above a threshold value, wherein the at least one second secondary antenna (116) is comprised in the at least one second secondary cell (118) of the communications system (100), and wherein the adding of the at least one second secondary antenna (116) to the set of receiving antennas further comprises adding the information about the at least one second secondary antenna (116) to the set of receiving antennas, wherein
- the receiving circuit (305) is further configured to receive the data comprised in the UL transmission from all antennas (110, 112, 116) comprised in the set of receiving antennas.

8. The first radio network node (102) of claim 7, wherein the first radio network node (102) further comprises:
- a searching circuit (302) configured to, when the user equipment (108) transmission is received in the primary antenna (110), search for the user equipment (108) transmission being received in the at least one first secondary antenna (112), wherein the at least one first secondary antenna (112) is comprised in at least one first secondary cell (106), which at least one first secondary cell (106) is served by the first radio network node (102) and is a neighbour cell to the primary cell (104) and wherein the adding of the at least one first secondary antenna (112) to the set of receiving antennas further comprises adding the information about the at least one first secondary antenna (112) when a signal strength of the received user equipment (108) transmission is above the threshold value.

9. The first radio network node (102) of any one of claim 7 or 8, wherein the common channel is a common Enhanced Dedicated Channel, E-DCH.

10. The first radio network node (102) of claim 9, wherein the signal strength is based on the received user equipment (108) transmission, such as a received access request and/or a received signal transmitted on a Dedicated Physical Control Channel, DPCCH, an Enhanced Dedicated Physical Control Channel, E-DPCCH, and/or on an Enhanced Dedicated Physical Data Channel, E-DPDCH.

11. The first radio network node (102) of any one of claim 7 or 8, wherein the common channel is a Random Access Channel, RACH.

12. The first radio network node (102) of claim 11, wherein the signal strength is based on the received user equipment (108) transmission, such as a received access request and/or a received signal transmitted on a Physical Random Access Channel, PRACH.

13. The communications system (100) comprising the first radio network node (102) of any one of claims 7-12.

## Patentansprüche

1. Verfahren in einem ersten Funknetzwerkknoten (102) zum Empfangen von Daten, die in einer Uplink-(UL-)Übertragung auf einem gemeinsamen Kanal umfasst sind, wobei der erste Funknetzwerkknoten (102) eine primäre Zelle (104) bedient, die eine primäre Antenne (110) umfasst, wobei der erste Funknetzwerkknoten (102), die primäre Zelle (104), ein zweiter Funknetzwerkknoten (114), mindestens eine zweite sekundäre Zelle (118), die durch den zweiten Funknetzwerkknoten (114) bedient wird, mindestens eine zweite sekundäre Antenne (116) und mindestens eine erste sekundäre Antenne (112) in einem Kommunikationssystem (100) umfasst sind, und wobei sich eine Benutzerausrüstung (108) in der primären Zelle (104) befindet, wobei das Verfahren Folgendes umfasst:
- wenn eine Übertragung der Benutzerausrüstung (108) in der primären Antenne (110) empfangen wird, Anfordern (202) des zweiten Funknetzwerkknotens (114), um die Übertragung der Benutzerausrüstung (108), die in der mindestens einen zweiten sekundären Antenne (116) der mindestens einen zweiten sekundären Zelle (118) empfangen wird, zu suchen, wobei die mindestens eine zweite sekundäre Zelle (118) eine zu der primären Zelle (104) benachbarte Zelle ist;
- wenn die Übertragung der Benutzerausrüstung (108) in der mindestens einen zweiten sekundären Antenne (116) empfangen wird, Empfangen (203) von Informationen über die mindestens eine zweite sekundäre Antenne (116) von dem zweiten Funknetzwerkknoten (114);
- Hinzufügen (204) der primären Antenne (110) und mindestens einer sekundären Antenne (112, 116) zu einem Satz von Empfangsantennen, wenn eine Signalstärke der empfangenen Übertragung der Benutzerausrüstung (108) über einem Schwellenwert liegt, wobei die mindestens eine zweite sekundäre Antenne (116) in der mindestens einen zweiten sekundären Zelle (118) des Kommunikationssystem (100) umfasst ist, und wobei das Hinzufügen der mindestens einen zweiten sekundären Antenne (116) zu dem Satz von Empfangsantennen ferner Hinzufügen der Informationen über die mindestens eine zweite sekundäre Antenne (116) zu dem Satz von Empfangsantennen umfasst; und
- Empfangen (205) der Daten, die in der UL-Übertragung umfasst sind, von allen Antennen (110, 112, 116), die in dem Satz von Empfangsantennen umfasst sind.

2. Verfahren nach Anspruch 1, wobei das Verfahren ferner Folgendes umfasst:
- wenn die Übertragung der Benutzerausrüstung (108) in der primären Antenne (110) empfangen wird, Suchen (201) nach der Übertragung der Benutzerausrüstung (108), die in der mindestens einen ersten sekundären Antenne (112) empfangen wird, wobei die mindestens eine erste sekundären Antenne (112) in mindestens einer ersten sekundären Zelle (106) umfasst ist, wobei mindestens eine erste sekundäre Zelle (106) durch den ersten Funknetzwerkknoten (102) bedient wird und eine Nachbarzelle der primären Zelle (104) ist, und wobei das Hinzufügen (204) der mindestens einen ersten sekundären Antenne (112) zu dem Satz von Empfangsantennen ferner Hinzufügen der Information über die mindestens eine erste sekundäre Antenne (112) umfasst, wenn eine Signalstärke der empfangenen Übertragung der Benutzerausrüstung (108) über dem Schwellenwert liegt.

3. Verfahren nach einem der Ansprüche 1 oder 2, wobei der gemeinsame Kanal ein gemeinsamer erweiterter dedizierter Kanal (enhanced decidated channel - E-DCH) ist.

4. Verfahren nach Anspruch 3, wobei die Signalstärke auf der empfangenen Übertragung der Benutzervorrichtung (108) beruht, wie etwa einer empfangenen Zugriffsanforderung und/oder einem empfangenen Signal, das auf einem dedizierten physikalischen Steuerkanal (dedicated physical control channel - DPCCH), einem erweiterten dedizierten physikalischen Steuerkanal (enhanced dedicated physical control channel - E-DPCCH) und/oder einem erweiterten dedizierten physikalischem Datenkanal (enhanced dedicated physical data channel - E-DPDCH) übertragen wird.

5. Verfahren nach einem der Ansprüche 1 oder 2, wobei der gemeinsame Kanal ein Direktzugriffskanal (random access channel - RACH) ist.

6. Verfahren nach Anspruch 5, wobei die Signalstärke auf der empfangenen Übertragung der Benutzervorrichtung (108) beruht, wie etwa einer empfangenen Zugriffsanforderung und/oder eines empfangenen Signals, das auf einem physikalischen Direktzugriffskanal (physical random access channel - PRACH) empfangen wird.

7. Erster Funknetzwerkknoten (102) zum Empfangen von Daten, die in einer Uplink-(UL-)Übertragung auf einem gemeinsamen Kanal umfasst sind, wobei der erste Funknetzwerkknoten (102) eine primäre Zelle (104) bedient, die eine primäre Antenne (110) umfasst, wobei der erste Funknetzwerkknoten (102), die primäre Zelle (104), ein zweiter Funknetzwerkknoten (114), mindestens eine zweite sekundäre Zelle (118), die durch den zweiten Funknetzwerkknoten (114) bedient wird, mindestens eine zweite sekundäre Antenne (116), und mindestens eine erste sekundäre Antenne (112) in einem Kommunikationssystem (100) umfasst sind, und wobei sich eine Benutzerausrüstung (108) in der primären Zelle (104) befindet, wobei der erste Funknetzwerkknoten (102) Folgendes umfasst:
- eine Anforderungsschaltung (303), die dazu konfiguriert ist, wenn eine Übertragung der Benutzerausrüstung (108) in der primären Antenne (110) empfangen wird, den zweiten Funknetzwerkknoten (114) dazu aufzufordern, nach der Übertragung der Benutzerausrüstung (108) zu suchen, die in der mindestens einen zweiten sekundären Antenne (116) der mindestens einen zweiten sekundären Zelle (118), welche die Nachbarzelle zu der primären Zelle (104) ist, empfangen wird;
- eine Empfangsschaltung (305), die dazu konfiguriert ist, Informationen über die mindestens eine zweite sekundäre Antenne (116) von dem zweiten Funknetzwerkknoten (114) zu empfangen, wenn die Übertragung der Benutzerausrüstung (108) in der mindestens einen zweiten sekundären Antenne (116) empfangen wird;
- eine Hinzufügungsschaltung (304), die dazu konfiguriert ist, die primäre Antenne (110) und mindestens eine sekundäre Antenne (112, 116) zu einem Satz von Empfangsantennen hinzuzufügen, wenn eine Signalstärke der empfangenen Übertragung der Benutzerausrüstung (108) über einem Schwellenwert liegt, wobei die mindestens eine zweite sekundäre Antenne (116) in der mindestens einen zweiten sekundären Zelle (118) des Kommunikationssystems (100) umfasst ist, und wobei das Hinzufügen der mindestens einen zweiten sekundären Antenne (116) zu dem Satz von Empfangsantennen ferner Hinzufügen der Informationen über die mindestens eine zweite sekundäre Antenne (116) zu dem Satz von Empfangsantennen umfasst, wobei
- die Empfangsschaltung (305) ferner dazu konfiguriert ist, die Daten, die in der UL-Übertragung umfasst sind, von allen Antennen (110, 112, 116) zu empfangen, die in dem Satz von Empfangsantennen umfasst sind.

8. Erster Funknetzwerkknoten (102) nach Anspruch 7, wobei der erste Funknetzwerkknoten (102) ferner Folgendes umfasst:
- eine Suchschaltung (302), die dazu konfiguriert ist, wenn die Übertragung der Benutzervorrichtung (108) in der primären Antenne (110) empfangen wird, nach der Übertragung der Benutzervorrichtung (108) zu suchen, die in der mindestens einen ersten sekundären Antenne (112) empfangen wird, wobei die mindestens eine erste sekundäre Antenne (112) in mindestens einer ersten sekundären Zelle (106) umfasst ist, wobei die mindestens eine erste sekundäre Zelle (106) durch den ersten Funknetzwerkknoten (102) bedient wird und eine Nachbarzelle zu der primären Zelle (104) ist und wobei das Hinzufügen der mindestens einen ersten sekundären Antenne (112) zu dem Satz von Empfangsantennen ferner Hinzufügen der Informationen über die mindestens eine erste sekundäre Antenne (112) umfasst, wenn eine Signalstärke der empfangenen Übertragung der Benutzerausrüstung (108) über dem Schwellenwert liegt.

9. Erster Funknetzwerkknoten (102) nach einem der Ansprüche 7 oder 8, wobei der gemeinsame Kanal ein gemeinsamer erweiterter dedizierter Kanal (E-DCH) ist.

10. Funknetzwerkknoten (102) nach Anspruch 9, wobei die Signalstärke auf der empfangenen Übertragung der Benutzerausrüstung (108) beruht, wie etwa einer empfangenen Zugriffsanforderung und/oder einem empfangenen Signal, das auf einem dedizierten physikalischen Steuerkanal (DPCCH), einem erweiterten dedizierten physikalischen Steuerkanal (E-DPCCH) und/oder einem erweiterten dedizierten physikalischen Datenkanal (E-DPDCH) übertragen wird.

11. Erster Funknetzwerkknoten (102) nach einem der Ansprüche 7 oder 8, wobei der gemeinsame Kanal ein Direktzugriffskanal (RACH) ist.

12. Erster Funknetzwerkknoten (102) nach Anspruch 11, wobei die Signalstärke auf der empfangenen Übertragung der Benutzervorrichtung (108) beruht, wie etwa einer empfangenen Zugriffsanforderung und/oder einem empfangenen Signal, das auf einem physikalischen Direktzugriffskanal (PRACH) übertragen wird.

13. Kommunikationssystem (100), das den ersten Funknetzwerkknoten (102) nach einem der Ansprüche 7-12 umfasst.

## Revendications

1. Procédé dans un premier noeud de réseau radio (102) pour la réception de données comprises dans une transmission de liaison montante, UL, sur un canal commun, lequel premier noeud de réseau radio (102) dessert une cellule primaire (104) comprenant une antenne primaire (110), dans lequel le premier noeud de réseau radio (102), la cellule primaire (104), un second noeud de réseau radio (114), au moins une seconde cellule secondaire (118) desservie par le second noeud de réseau radio (114), au moins une seconde antenne secondaire (116), et au moins une première antenne secondaire (112) sont compris dans un système de communication (100), et dans lequel un équipement utilisateur (108) est placé dans la cellule primaire (104), le procédé comprend :
- lorsqu'une transmission d'équipement utilisateur (108) est reçue dans l'antenne primaire (110), le fait de demander (202) au second noeud de réseau radio (114) de rechercher la transmission d'équipement utilisateur (108) reçue dans l'au moins une seconde antenne secondaire (116) de l'au moins une seconde cellule secondaire (118), laquelle au moins une seconde cellule secondaire (118) est une cellule voisine de la cellule primaire (104) ;
- lorsque la transmission d'équipement utilisateur (108) est reçue dans l'au moins une seconde antenne secondaire (116), la réception (203) d'informations concernant l'au moins une seconde antenne secondaire (116) du second noeud de réseau radio (114) ;
- l'ajout (204) de l'antenne primaire (110) et d'au moins une antenne secondaire (112, 116) à un ensemble d'antennes de réception lorsqu'une intensité de signal de la transmission de l'équipement utilisateur (108) reçue est supérieure à une valeur de seuil, dans lequel l'au moins une seconde antenne secondaire (116) est comprise dans l'au moins une seconde cellule secondaire (118) du système de communication (100), et dans lequel l'ajout de l'au moins une seconde antenne secondaire (116) à l'ensemble d'antennes de réception comprend en outre l'ajout des informations concernant l'au moins une seconde antenne secondaire (116) à l'ensemble d'antennes de réception ; et
- la réception (205) des données comprises dans la transmission d'UL à partir de l'ensemble des antennes (110, 112, 116) contenues dans l'ensemble d'antennes de réception.

2. Procédé selon la revendication 1, dans lequel le procédé comprend en outre :
- lorsque la transmission de l'équipement utilisateur (108) est reçue dans l'antenne primaire (110), la recherche (201) de la transmission de l'équipement utilisateur (108) reçue dans l'au moins une première antenne secondaire (112), dans laquelle l'au moins une première antenne secondaire (112) est comprise dans au moins une première cellule secondaire (106), laquelle au moins une première cellule secondaire (106) est desservie par le premier noeud de réseau radio (102) et est une cellule voisine de la cellule primaire (104), et dans lequel l'ajout (204) de l'au moins une première antenne secondaire (112) à l'ensemble d'antennes de réception comprend en outre l'ajout des informations concernant l'au moins une première antenne secondaire (112) lorsqu'une intensité de signal de la transmission de l'équipement utilisateur (108) reçue est supérieure à la valeur de seuil.

3. Procédé selon l'une quelconque de la revendication 1 ou 2, dans lequel le canal commun est un canal dédié amélioré, E-DCH, commun.

4. Procédé selon la revendication 3, dans lequel l'intensité du signal est basée sur la transmission de l'équipement utilisateur (108) reçue, telle qu'une demande d'accès reçue et/ou qu'un signal reçu transmis sur un canal de contrôle physique dédié, DPCCH, un canal de contrôle physique dédié amélioré, E-DPCCH, et/ou sur un canal de données physique dédié amélioré, E-DPDCH.

5. Procédé selon l'une quelconque de la revendication 1 ou 2, dans lequel le canal commun est un canal d'accès aléatoire, RACH.

6. Procédé selon la revendication 5, dans lequel l'intensité de signal est basée sur la transmission de l'équipement utilisateur (108) reçue, telle qu'une demande d'accès reçue et/ou qu'un signal reçu transmis sur un canal d'accès aléatoire physique, PRACH.

7. Premier noeud de réseau radio (102) pour la réception de données comprises dans une transmission de liaison montante, UL, sur un canal commun, lequel premier noeud de réseau radio (102) dessert une cellule primaire (104) comprenant une antenne primaire (110), dans lequel le premier noeud de réseau radio (102), la cellule primaire (104), un second noeud de réseau radio (114), au moins une seconde cellule secondaire (118) desservie par le second noeud de réseau radio (114), au moins une seconde antenne secondaire (116), et au moins une première antenne secondaire (112) sont compris dans un système de communication (100), et dans lequel un équipement utilisateur (108) est placé dans la cellule primaire (104), le premier noeud de réseau radio (102) comprend :
- un circuit de demande (303) configuré pour demander, lorsqu'une transmission de l'équipement utilisateur (108) est reçue dans l'antenne primaire (110), au second noeud de réseau radio (114) de rechercher la transmission de l'équipement utilisateur (108) reçue dans l'au moins une seconde antenne secondaire (116) de l'au moins une seconde cellule secondaire (118) étant la cellule voisine de la cellule primaire (104) ;
- un circuit de réception (305) configuré pour recevoir des informations concernant l'au moins une seconde antenne secondaire (116) du second noeud de réseau radio (114) lorsque la transmission de l'équipement utilisateur (108) est reçue dans l'au moins une seconde antenne secondaire (116) ;
- un circuit d'addition (304) configuré pour ajouter l'antenne primaire (110) et au moins une antenne secondaire (112, 116) à un ensemble d'antennes de réception lorsqu'une intensité de signal de la transmission de l'équipement utilisateur (108) reçue est supérieure à une valeur de seuil, dans lequel l'au moins une seconde antenne secondaire (116) est comprise dans l'au moins une seconde cellule secondaire (118) du système de communication (100), et dans lequel l'ajout de l'au moins une seconde antenne secondaire (116) à l'ensemble d'antennes de réception comprend en outre l'ajout des informations concernant l'au moins une seconde antenne secondaire (116) à l'ensemble d'antennes de réception, dans lequel
- le circuit de réception (305) est configuré en outre pour recevoir les données comprises dans la transmission d'UL à partir de toutes les antennes (110, 112, 116) comprises dans l'ensemble d'antennes de réception.

8. Premier noeud de réseau radio (102) selon la revendication 7, dans lequel le premier noeud de réseau radio (102) comprend en outre :
- un circuit de recherche (302) configuré pour rechercher, lorsque la transmission de l'équipement utilisateur (108) est reçue dans l'antenne primaire (110), la transmission de l'équipement utilisateur (108) reçue dans l'au moins une première antenne secondaire (112), dans lequel l'au moins une antenne secondaire (112) est comprise dans au moins une première cellule secondaire (106), laquelle au moins une première cellule secondaire (106) est desservie par le premier noeud de réseau radio (102) et est une cellule voisine de la cellule primaire (104) et dans lequel l'ajout de l'au moins une première antenne secondaire (112) à l'ensemble d'antennes de réception comprend en outre l'ajout des informations concernant l'au moins une première antenne secondaire (112) lorsqu'une intensité de signal de la transmission d'équipement utilisateur (108) reçue est supérieure à la valeur de seuil.

9. Premier noeud de réseau radio (102) selon l'une quelconque de la revendication 7 ou 8, dans lequel le canal commun est un canal dédié amélioré commun, E-DCH.

10. Premier noeud de réseau radio (102) selon la revendication 9, dans lequel l'intensité du signal est basée sur la transmission de l'équipement utilisateur (108) reçue, telle qu'une demande d'accès reçue et/ou qu'un signal reçu transmis sur un canal de contrôle physique dédié, DPCCH, un canal de contrôle physique dédié amélioré, E-DPCCH, et/ou un canal de données physique dédié amélioré, E-DPDCH.

11. Premier noeud de réseau radio (102) selon l'une quelconque de la revendication 7 ou 8, dans lequel le canal commun est un canal d'accès aléatoire, RACH.

12. Premier noeud de réseau radio (102) selon la revendication 11, dans lequel l'intensité du signal est basée sur la transmission de l'équipement utilisateur (108) reçue, telle qu'une demande d'accès reçue et/ou qu'un signal reçu transmis sur un canal d'accès aléatoire physique, PRACH.

13. Système de communication (100) comprenant le premier noeud de réseau radio (102) selon l'une quelconque des revendications 7 à 12.
